# EUROPEAN PATENT APPLICATION

(11) **EP 3 312 785 A1**
(43) Date of publication of application: **25.04.2018**
(21) Application number: 17181847.9
(22) Date of filing: 18.07.2017
(51) Int. Cl.: G06Q 10/08, G06F 17/30, G06Q 50/28, G06T 7/00

(54) **A TAGLESS BAGGAGE TRACKING SYSTEM AND METHOD**

(30) Priority: 21.10.2016 US 201662411020 P
(71) Applicant: Imseeh, Karam Osama Karam, Amman (JO)
(72) Inventor: Imseeh, Karam Osama Karam, Amman (JO)
(74) Representative: Viering, Jentschura & Partner mbB Patent- und Rechtsanwälte

(57) **Abstract**

This invention relates to a tagless baggage tracking system and method that allows for the identification of baggage that has lost identification tags during transit. The system and method provide for digitally associating baggage to a particular passenger via digital images and a searchable database digital records that include digital images and passenger information. This method and system can be used in a tagless baggage tracking system. Also provided is a method and system provides a searchable database of baggage images thereby providing for the identification of the owner of tagless baggage and/or for the locating of misdirected or lost baggage.

## Description

### FIELD OF THE INVENTION

This invention pertains to the field of baggage control and in particular, to a tagless baggage tracking system and method.

### BACKGROUND OF THE INVENTION

Loss of baggage during travel is a concern for both travelers and travel carriers alike. For travellers baggage loss represents both an emotional and financial burden. Travel carriers are impacted financially in terms of compensating travellers for lost or delayed baggage, man-hours lost attempting to locate lost baggage and the damage mishandling baggage causes to their reputation.

A contributing factor to lost baggage is lost or unreadable baggage tags. Loss of or damage to tags results from the handling and the processing of the baggage during transit. Lost baggage occurs regularly with airline travel as proper routing of baggage requires current routing labels that may be lost during transit. Moreover, mistake with baggage handling can occur when the baggage has more than one tag, for example, when old tags are not removed. Extraneous tags can also causes confusion leading to mistakes in handling.

The loss of baggage can also occur on cruise ships, ferries and trains. Loss or misplacement of baggage is especially problematic on cruises because of the limited availability of replacement items including, for example, clothing on the cruise.

This background information is provided for the purpose of making known information believed by the applicant to be of possible relevance to the present invention. No admission is necessarily intended, nor should be construed, that any of the preceding information constitutes prior art against the present invention.

### SUMMARY OF THE INVENTION

An object of the present invention is to provide a tagless baggage tracking system and method. In accordance with an aspect of the present invention, there is provided a computer implemented method of tagging baggage to a passenger, said method comprising the steps of capturing an image of baggage associated with the passenger at check-in; associating the image of the baggage with passenger data information to create a baggage record; and optionally storing the baggage record in a database.

In accordance with another aspect of the invention, there is provided a computer implemented method of tagging baggage to a passenger, said method comprising the steps of capturing an image of a passenger; capturing an image of baggage associated with the passenger; associating the image of the passenger, the image of baggage with passenger data information to create a baggage record; and storing the baggage record in a database.

In accordance with another aspect of the invention, there is provided a computer implemented method for identifying the owner/passenger of a tagless baggage, said method comprising the steps of searching a baggage record database; wherein the baggage record database comprises a plurality of baggage records, each record comprises an image of baggage taken at check-in; owner/passenger information and optionally an image of the baggage owner/passenger; and identifying the owner/passenger of the tagless baggage based on the search.

In accordance with another aspect of the invention, there is provided a computer implemented method for locating tagless baggage, said method comprising the step of searching a tagless baggage database; wherein the tagless baggage database comprises a plurality of tagless baggage records, each record comprising an image of a tagless baggage and the tagless baggage's current location.

In accordance with one embodiment, the search of the tagless baggage database comprises searching images in the database with an image of a missing baggage taken at check-in.

In accordance with another embodiment, the search is weight restricted wherein only records of tagless baggage having a specific weight or weight within a specific range are searched.

In accordance with another aspect of the invention, there is provided a computer implemented method for locating tagless baggage, said method comprising the steps of providing a tagless baggage database; wherein the tagless baggage database comprises a plurality of tagless baggage records, each record comprising an image of a tagless baggage, the weight of the tagless baggage and current location; searching the tagless baggage by comparing images in the database with an image of a missing baggage taken at check-in, wherein the search is weight restricted based on the weight of the missing baggage at check-in.

In accordance with another aspect of the invention, there is provided a computer implemented method of tracking baggage, said method comprising the steps of capturing an image of a passenger; capturing an image of baggage associated with the passenger; associating the image of the passenger, the image of baggage with passenger information to create a baggage record; storing the baggage record in a database; and tracking the baggage during transit using digital image recognition.

In accordance with another aspect of the invention, there is provided a computer implemented method of tracking baggage, said method comprising the steps of capturing an image of baggage associated with the passenger; associating the image of baggage with routing information to create a routing plan; storing the routing plan in a database; and tracking the baggage during transit using digital image recognition.

In accordance with another aspect of the invention, there is provided a computer implemented method of tracking baggage, said method comprising the steps of capturing an image of a passenger;
capturing an image of baggage associated with the passenger; associating the image of the passenger, the image of baggage with passenger information to create a baggage record; storing the baggage record in a database; and matching the baggage with its passenger/owner when leaving the airport using digital image recognition.

According to a first further aspect of the present invention, which first further aspect may also be combined with any other aspect of the present invention, and/or with any example of the present invention, a computer implemented method of tagging baggage to a passenger is provided, said method comprising the steps of: capturing an image of baggage associated with the passenger; associating the image of baggage with passenger information to create a baggage record; and storing the baggage record in a database.

According to a second further aspect of the present invention, which second further aspect may also be combined with any other aspect of the present invention, like, for example, with the first further aspect of the present invention and/or with any example of the present invention, a digital method of tagging baggage to a passenger is provided, said method comprising the steps of: capturing an image of a passenger; capturing an image of baggage associated with the passenger; associating the image of the passenger, the image of baggage with passenger information to create a baggage record; and storing the baggage record in a database.

According to a third further aspect of the present invention, which third further aspect may also be combined with any other aspect of the present invention, like, for example, with the first further aspect of the present invention and/or with the second further aspect of the present invention, and/or with any example of the present invention, a computer implemented method for identifying the owner of a lost baggage is provided, said method comprising the steps of: searching a baggage record database; wherein the baggage record database comprises a plurality of baggage records, each record comprising an image of baggage and associated passenger information; and identifying the owner of a baggage based on the search.

According to a first example of the present invention, and particularly according to a first example of any of the first and/or second and/or third aspects of the present invention, which first example may also be combined with any other example of the present invention or any combination of such examples as disclosed herein, the passenger information comprises contact information and travel itinerary.

According to a second example of the present invention, and particularly according to a second example of any of the first and/or second and/or third aspects of the present invention, which second example may also be combined with any other example of the present invention or any combination of such examples as disclosed herein, like, for example, with said first example, the passenger information comprises a digital image of the passenger that is optionally tagged with descriptors of the passenger.

According to a third example of the present invention, and particularly according to a third example of any of the first and/or second and/or third aspects of the present invention, which third example may also be combined with any other example of the present invention or any combination of such examples as disclosed herein, like, for example, with any of said first and/or second examples, the digital image of the passenger is obtained from travel documents.

According to a fourth example of the present invention, and particularly according to a fourth example of any of the first and/or second and/or third aspects of the present invention, which fourth example may also be combined with any other example of the present invention or any combination of such examples as disclosed herein, like, for example, with any of said first and/or second and/or third examples, the digital image of the passenger is captured when the baggage is checked in.

According to a fifth example of the present invention, and particularly according to a fifth example of any of the first and/or second and/or third aspects of the present invention, which fifth example may also be combined with any other example of the present invention or any combination of such examples as disclosed herein, like, for example with any of said first and/or second and/or third and/or fourth examples, the digital image of the baggage includes a size and or colour reference.

According to a sixth example of the present invention, and particularly according to a sixth example of any of the first and/or second and/or third aspects of the present invention, which sixth example may also be combined with any other example of the present invention or any combination of such examples as disclosed herein, like, for example, with any of said first and/or second and/or third and/or fourth and/or fifth examples, the digital image is a three-dimensional image.

According to a seventh example of the present invention, and particularly according to a seventh example of any of the first and/or second and/or third aspects of the present invention, which seventh example may also be combined with any other example of the present invention or any combination of such examples as disclosed herein, like, for example, with any of said first and/or second and/or third and/or fourth and/or fifth and/or sixth examples, the digital image of the baggage is automatically tagged.

According to an eighth example of the present invention, and particularly according to an eighth example of any of the first and/or second and/or third aspects of the present invention, which eighth example may also be combined with any other example of the present invention or any combination of such examples as disclosed herein, like, for example, with any of said first and/or second and/or third and/or fourth and/or fifth and/or sixth and/or seventh examples, the digital image of the baggage is analyzed for prominent colour and the digital image is tagged with identifying colour.

According to a ninth example of the present invention, and particularly according to a ninth example of any of the first and/or second and/or third aspects of the present invention, which ninth example may also be combined with any other example of the present invention or any combination of such examples as disclosed herein, like, for example, with any of said first and/or second and/or third and/or fourth and/or fifth and/or sixth and/or seventh and/or eighth examples, the digital image is tagged with description of baggage.

According to a tenth example of the present invention, and particularly according to a tenth example of any of the first and/or second and/or third aspects of the present invention, which tenth example may also be combined with any other example of the present invention or any combination of such examples as disclosed herein, like, for example, with any of said first and/or second and/or third and/or fourth and/or fifth and/or sixth and/or seventh and/or eighth and/or ninth examples, the description comprises details regarding baggage size and shape.

According to a eleventh example of the present invention, and particularly according to a eleventh example of any of the first and/or second and/or third aspects of the present invention, which eleventh example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth examples, the digital image is tagged with passenger information.

According to a twelfth example of the present invention, and particularly according to a twelfth example of any of the first and/or second and/or third aspects of the present invention, which twelfth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh examples, the search comprises a natural language search.

According to a thirteenth example of the present invention, and particularly according to a thirteenth example of any of the first and/or second and/or third aspects of the present invention, which thirteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth examples, the searching the baggage record database comprises searching the database using an image matching software.

According to a fourteenth example of the present invention, and particularly according to a fourteenth example of any of the first and/or second and/or third aspects of the present invention, which fourteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth examples, the image matching software utilizes colour matching, size matching, shape matching, outline matching, relative position of landmarks on the baggage or combination thereof.

According to a fourth further aspect of the present invention, which fourth further aspect may also be combined with any other aspect of the present invention, like, for example, with the first further aspect of the present invention and/or with the second further aspect of the present invention and/or with the third further aspect of the present invention, and/or with any example of the present invention, or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth examples, a computer implemented method for locating tagless baggage is provided, said method comprising the step of: searching a tagless baggage database; wherein the tagless baggage database comprises a plurality of tagless baggage records, each record comprising an image of a tagless baggage and current location.

According to a fifteenth example of the present invention, and particularly according to a fifteenth example of any of the first and/or second and/or third and/or fourth aspects of the present invention, which fifteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth examples, each record includes weight of the baggage.

According to a sixteenth example of the present invention, and particularly according to a sixteenth example of any of the first and/or second and/or third and/or fourth aspects of the present invention, which sixteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth examples, the tagless baggage database includes tagless baggage records from a plurality of airports.

According to a seventeenth example of the present invention, and particularly according to a seventeenth example of any of the first and/or second and/or third and/or fourth aspects of the present invention, which seventeenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth examples, each image in the tagless baggage database includes a size and / or colour reference.

According to a eighteenth example of the present invention, and particularly according to a eighteenth example of any of the first and/or second and/or third and/or fourth aspects of the present invention, which eighteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth examples, each image in the tagless baggage database is a three-dimensional image.

According to a nineteenth example of the present invention, and particularly according to a nineteenth example of any of the first and/or second and/or third and/or fourth aspects of the present invention, which nineteenth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth examples, each image in the tagless baggage database is tagged.

According to a twentieth example of the present invention, and particularly according to a twentieth example of any of the first and/or second and/or third and/or fourth aspects of the present invention, which twentieth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth examples, each image in the tagless baggage database is analyzed for prominent colour and the digital image is tagged with identifying colour.

According to a twenty-first example of the present invention, and particularly according to a twenty-first example of any of the first and/or second and/or third and/or fourth aspects of the present invention, which twenty-first example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth examples, each image in the tagless baggage database is tagged with description of baggage.

According to a twenty-second example of the present invention, and particularly according to a twenty-second example of any of the first and/or second and/or third and/or fourth aspects of the present invention, which twenty-second example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first examples, the description comprises details regarding baggage size and shape.

According to a twenty-third example of the present invention, and particularly according to a twenty-third example of any of the first and/or second and/or third and/or fourth aspects of the present invention, which twenty-third example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second examples, the search comprises a natural language search.

According to a twenty-fourth example of the present invention, and particularly according to a twenty-fourth example of any of the first and/or second and/or third and/or fourth aspects of the present invention, which twenty-fourth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third examples, the search of the tagless baggage database comprises searching images in the database with an image of a missing baggage taken at check-in.

According to a twenty-fifth example of the present invention, and particularly according to a twenty-fifth example of any of the first and/or second and/or third and/or fourth aspects of the present invention, which twenty-fifth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth examples, image matching includes colour matching, size matching, shape matching, outline matching, relative position of landmarks on the baggage or combination thereof.

According to a twenty-sixth example of the present invention, and particularly according to a twenty-sixth example of any of the first and/or second and/or third and/or fourth aspects of the present invention, which twenty-sixth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth examples, the search is weight restricted.

According to a fifth further aspect of the present invention, which fifth further aspect may also be combined with any other aspect of the present invention, like, for example, with the first further aspect of the present invention and/or with the second further aspect of the present invention and/or with the third further aspect of the present invention and/or with the fourth further aspect of the present invention, and/or with any example of the present invention, or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth examples, a computer implemented method for locating tagless baggage is provided, said method comprising the steps of: providing a tagless baggage database; wherein the tagless baggage database comprises a plurality of tagless baggage records, each record comprising an image of a tagless baggage, the weight of the tagless baggage and current location; searching the tagless baggage by comparing images in the database with an image of a missing baggage taken at check-in, wherein the search is weight restricted based on the weight of the missing baggage at check-in.

According to a sixth further aspect of the present invention, which sixth further aspect may also be combined with any other aspect of the present invention, like, for example, with the first further aspect of the present invention and/or with the second further aspect of the present invention and/or with the third further aspect of the present invention and/or with the fourth further aspect of the present invention and/or with the fifth further aspect of the present invention, and/or with any example of the present invention, or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth examples, a computer implemented method of tracking baggage is provided, said method comprising the steps of: capturing an image of a passenger; capturing an image of baggage associated with the passenger; associating the image of the passenger, the image of baggage with passenger information to create a baggage record; storing the baggage record in a database; and matching the baggage with its passenger/owner when leaving the airport using digital image recognition.

According to a twenty-seventh example of the present invention, and particularly according to a twenty-seventh example of any of the first and/or second and/or third and/or fourth and/or fifth and/or sixth aspects of the present invention, which twenty-seventh example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth examples, the baggage is RFID tagged at check-in.

According to a twenty-eighth example of the present invention, and particularly according to a twenty-eighth example of any of the first and/or second and/or third and/or fourth and/or fifth and/or sixth aspects of the present invention, which twenty-eighth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth and/or twenty-seventh examples, the method comprises the step of sending an alert if the baggage is retrieved by a passenger not associated with the baggage in the baggage record.

According to a seventh further aspect of the present invention, which seventh further aspect may also be combined with any other aspect of the present invention, like, for example, with the first further aspect of the present invention and/or with the second further aspect of the present invention and/or with the third further aspect of the present invention and/or with the fourth further aspect of the present invention and/or with the fifth further aspect of the present invention and/or with the sixth further aspect of the present invention, and/or with any example of the present invention, or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth and/or twenty-seventh and/or twenty-eighth examples, a computer implemented method of tracking baggage is provided, said method comprising the steps of: capturing an image of baggage associated with the passenger; associating the image of baggage with routing information to create a routing plan; storing the routing plan in a database; and tracking the baggage during transit using digital image recognition.

According to a twenty- ninth example of the present invention, and particularly according to a twenty- ninth example of any of the first and/or second and/or third and/or fourth and/or fifth and/or sixth and/or seventh aspects of the present invention, which twenty- ninth example may also be combined with any other example of the present invention or any combination of such examples as disclosed herein, like, for example, with any of said first and/or second and/or third and/or fourth and/or fifth and/or sixth and/or seventh and/or eighth and/or ninth and/or tenth and/or eleventh and/or twelfth and/or thirteenth and/or fourteenth and/or fifteenth and/or sixteenth and/or seventeenth and/or eighteenth and/or nineteenth and/or twentieth and/or and/or twenty-first and/or twenty-second and/or twenty-third and/or twenty-fourth and/or twenty-fifth and/or twenty-sixth and/or twenty-seventh and/or twenty-eighth examples, a digital image of the baggage is capture at a plurality of points during routing.

### BRIEF DESCRIPTION OF THE FIGURES

Embodiments of the present invention will be better understood in connection with the following Figures, in which:
Figure 1 illustrates a method of creating a baggage record database.
Figure 2 illustrates a method of identifying owner of a tagless baggage.
Figures 3A and 3B illustrates a method of locating a missing tagless baggage.

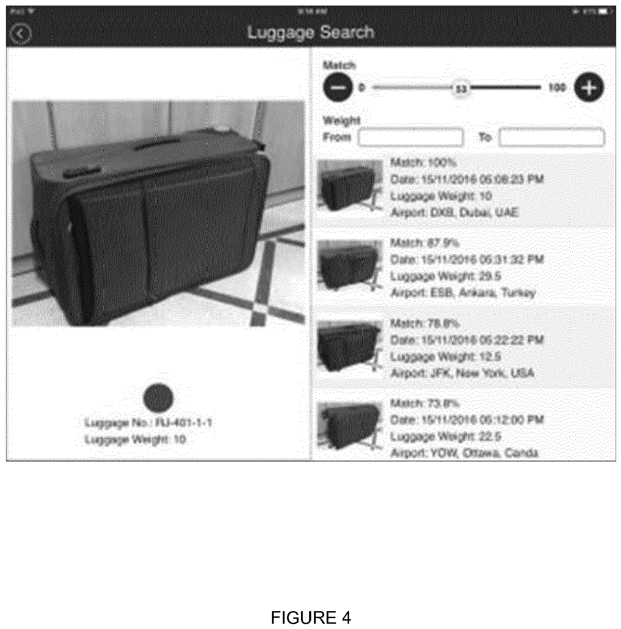

Figure 4 is a screen shot of one embodiment of a method of Figure 3.

### DETAILED DESCRIPTION OF THE INVENTION

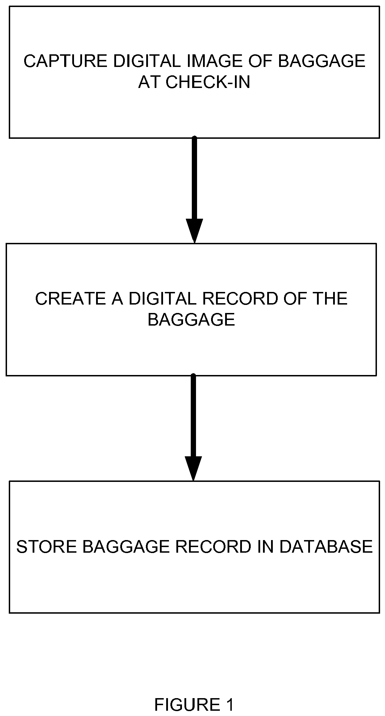

The system and method of the invention facilitates the return of tagless baggage to a passenger by providing a visual record of the baggage. A passenger who is checking in baggage at a service counter or kiosk for travel including travel by aircraft, by train, by bus or by boat, including cruise ships, ferries and the like, calls up or retrieves their travel plans either by entering an unique booking number, bibliographic information, or other information that can be used to retrieve the appropriate records for the passenger into a terminal or kiosk. Appropriate terminals and kiosks are known in the art. Alternatively, a booking agent retrieves the travel plans. Referring to Figure 1, as part of the check-in procedure, the passenger or booking agent enters the number of pieces of baggage to be checked. At least one digital image of each piece of baggage is taken and associated with passenger data to obtain a baggage record and the baggage is weighed. The baggage record is added to a searchable baggage record database. Optionally, the passenger is provided with an e-copy of the baggage record and/or a baggage record number to allow for retrieval of the digital image and optionally associated baggage information.

In some embodiments, more than one digital image of the baggage is captured. Optionally, if the baggage includes a brand name or trademark, an image of the brand name or trademark is captured.

In some embodiments, the digital image is a two-dimensional image. In other embodiments, the digital image is a three-dimensional image.

In some embodiments, the digital image is a colour image. In other embodiments, the digital image is a black and white image.

The digital image of the baggage can be tagged with relevant information including colour, size, weight, dimensions, shape, brand and type, for example, wheeled, hard shell, garment bag, etc. In some, embodiments, the tagging is automatic and based on analysis of the digital image. Optionally, the digital image of the baggage includes a size and/or colour reference. In some embodiments, the colour reference is a middle gray card or a colour reference card. In some embodiments, the digital images are processed to compensate for differences in illuminant.

In some embodiments, the digital image of the baggage is tagged with a reference number and relevant information regarding the baggage is included in the file to which the reference number refers. In some embodiments, the reference number is the same as the baggage record number.

In embodiments where the digital image of baggage includes a size reference the baggage dimensions are optionally automatically estimated using appropriate software in the art. In some embodiments, the digital image of the baggage is assessed using appropriate software known in the art for characteristics, for example, design features *(i.e.* is the bag wheeled, number of wheels, etc.). The software can be configured to detect various baggage properties including colour, size, dimensions, shape, brand and type, for example, wheeled, hard shell, garment bag, etc. Optionally, the software is configured to note possible distinguishing features of the baggage, for example, stickers, damage, etc. In some embodiments, the system and method is configured to automatically populate a baggage record.

The digital image is captured by means known in the art including but not limited to digital camera, three dimensional digital scanner, 360 degree camera.

In some embodiments, an x-ray or scan of the contents of the baggage is included in the baggage record. In such, embodiments, the x-ray or scan of the contents of the baggage can be used to validate potential matches.

In some embodiments, a camera will be placed on the check-in desk to take a picture of the passenger's bag when checking in.

In some embodiments, the passenger can capture the digital image on his/her smartphone and enter any relevant information on the application or by otherwise providing a copy of the digital image.

Alternatively, kiosks are provided that are configured to capture at least one digital image of the baggage and optionally weighs the baggage. Using the kiosks, passengers associate the digital image to passenger information.

In addition to a digital image of the baggage, other information with respect to the baggage including for example baggage weight and dimensions can be included. In some embodiments, weight of the baggage is automatically entered into the record when the baggage is weighed.

The passenger data may include name, address and contract information, travel itinerary including carrier details, destination, hotel information; information regarding travelling companion, etc. The passenger data may also include a description or digital Image of the passenger. In some embodiments the description of the passenger includes an estimation of passenger height and weight, if the passenger wears glasses, has a beard, etc. In some embodiments, software will be used to automatically provide an estimation of passenger height and weight.

The digital image of the baggage can also be used for handling the baggage inside the airport or during transit, for example in order to track it through transit and direct it to the right belt/plane. This can be used in addition to traditional tracking systems, for example, barcode, RFID, and Bluetooth or in place of the traditional systems thereby eliminating the need for tags. In such embodiments, cameras will be positioned in the same place as the barcode readers that will capture the digital image of the bag and the software will then identify/detect it and route/direct it in the same manner as currently implemented for other systems.

Optionally, the digital image tracking system can be configured to ensure that the baggage is collected by the appropriate passenger. In some embodiments, the passenger's image is also captured and used to be matched to the bag when he/she leaves the airport to prevent theft or mismatch. In some embodiments, the system is configured to provide for pick-up by passengers travelling together.

In some embodiments, a tracking tag is fixed to the baggage at check-in. In such embodiments, tracking tag information is included in the baggage record. Tracking tags are known in the art and include GPS transmitter tags, RFID tags, barcode tags and Bluetooth tags. Optionally, the method and system is integrated with systems for tracking baggage such as that disclosed in U.S. Patent No. 6,222,452, U.S. Patent No. 7,199,712 and U.S. Patent No. 8,253,557. The current location or last known location of the baggage based on GPS, RFID, barcode or Bluetooth tag location may be included in the baggage record.

In some embodiments, the current or last known location of the baggage is updated based on tracking information.

Optionally, a copy of the baggage record is provided to the passenger. In some embodiments, the copy is an electronic copy emailed to the passenger.

The completed baggage records are stored in a searchable baggage record database. In some embodiments, the baggage record database is a cloud-based database. In some embodiments, the baggage record database is at one or more data centers. The baggage record database may include records for a single terminal or may includes records from any connecting terminal, for example, the baggage record database for airports optionally include records from all connecting airports. Connecting airports include airports that have direct flights between or airports connected via other airports or hubs.

The baggage record database may be configured to allow for a natural language search where key words or search terms are used to review records. In some embodiments, the database may be configured to provide for the use of image matching software. Optionally, the image matching software utilizes colour matching, size matching, shape matching, outline matching, relative position of landmarks on the baggage or combination thereof.

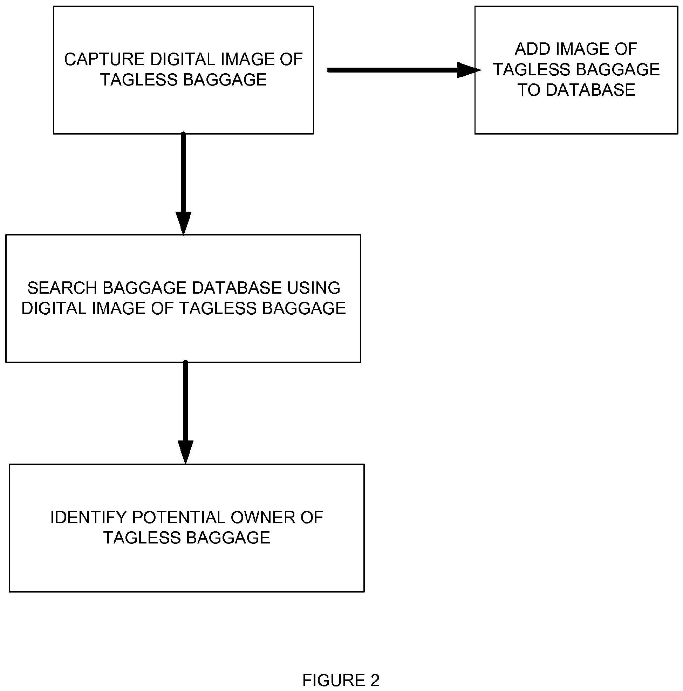

Referring to Figure 2, to identify unclaimed baggage without tags or with unreadable tags, a baggage service employee captures at least one digital image of the unclaimed and tagless baggage and the baggage is weighed. The baggage service employee creates a tagless baggage record that includes the digital image of the baggage, its weight and its current location (for example, airport it arrived at) and optionally details regarding the baggage including colour, size, shape, brand and type, for example, wheeled, hard shell, garment bag, etc. The image is optionally tagged as detailed above. Any additional available information, for example, point of origin (*i.e.* originating airport or flight or date of arrival) is included in the tagless baggage record. The completed baggage records are stored in a searchable tagless database. The tagless database includes records from any connecting terminal, for example, the tagless database for airports optionally include records from all connecting airports. Connecting airports include airports that have direct flights between or airports connected via other airports or hubs. In some embodiments, the tagless database is a cloud-based database. In some embodiments, the tagless database is updated as new baggage images are entered and optionally searches that failed to find a match are redone following addition of new images.

In some embodiments where the baggage record database includes baggage records from connecting terminals (*i.e.* airports), the baggage service employee can attempt to identify the owner of an unclaimed, tagless baggage by accessing and searching the baggage record database. The search may be a word search and/or image search or a combination of both. In some embodiments, the search is based on a comparison of the digital image taken of the unclaimed, tagless baggage with digital images contained within the baggage record database.

In some embodiments, the search is limited to baggage of in a certain weight range or baggage having a certain weight. In some embodiments, searches may be otherwise limited including for example originating location of baggage, etc. Probable matches are identified and an alert is optionally sent to one or more of the passenger and the service desk located at the terminal the baggage should have been sent to (*i.e.* the destination of the owner of baggage). In some embodiments, the tagless baggage record is updated to indicate probable matches.

In some embodiments, the tagless baggage database is updated has tagless baggage is claimed.

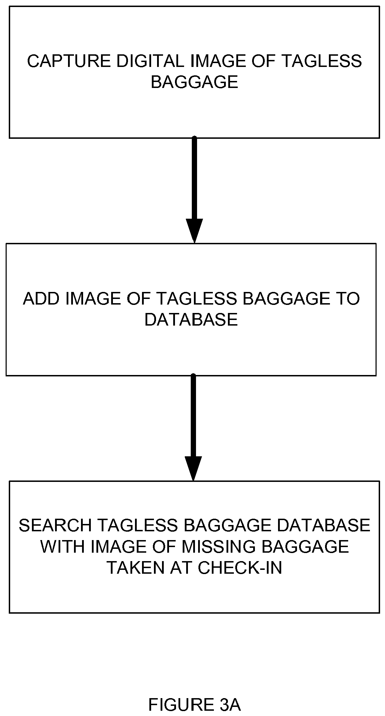

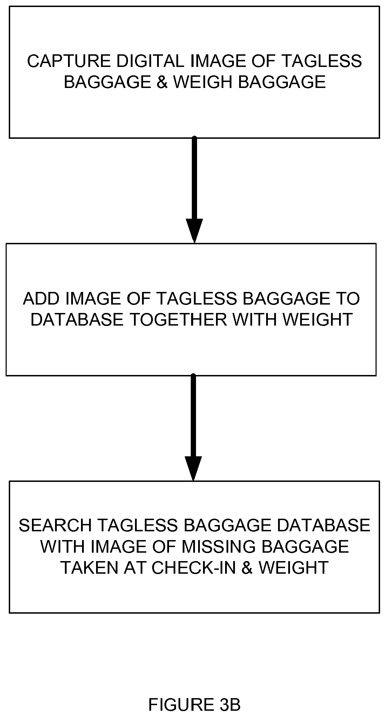

Referring to Figures 3A and 3B, alternatively, if a passenger fails to locate their baggage upon arrival at their destination, the passenger can initiate a search for the baggage either at a service desk or at a kiosk or using an app or web based service. The baggage record generated at check-in is retrieved from the baggage record database. Using information and/or the digital image of the baggage in the baggage record (*i.e.* a digital image taken at check-in), the database of tagless baggage is searched for potential matches. As shown in Figure 3A, the search is conducted using the digital image taken at check-in. The search can be weight limited as shown in Figure 3B.

In some embodiments, the search of the tagless baggage database is conducted using the digital image from the baggage record generated at check-in along with the weight of the baggage listed on the baggage record. Optionally, the search is based on a comparison of the digital image taken at check-in with digital images contained within the tagless baggage database.

In some embodiments, the search of the tagless database is configured to identify near matches to allow for in-transit damage to the baggage.

In some embodiments, the system and methods is accessible to all terminals that are connected (*i.e.* airports) either directly or via other terminals or hubs.

Optionally, probable matches are identified and an alert is optionally sent to one or more of the passenger and service desk located at the terminal the baggage should have been sent to. In some embodiments where the digital records include an image of the passenger, the method and system can be used to ensure baggage is removed by the passenger on the baggage record. For example, a method of matching a passenger to his/her bag when leaving the airport, may comprise the steps of taking an iris scan, facial recognition or a full photograph (showing all of the passenger including his/her clothes) and optionally the weight of the passenger when checking in, this way the system has a picture of the bag and of the passenger, so when the passenger arrives to his/her destination and leaves the airport they will be required to pass through a gate which will have a camera focused on it in order to match the passenger with the bag and ensuring he/she took the right bag using the same matching method used earlier.

In embodiments where an RFID tag are used, when the passenger leaves the airport he/she will also be required to pass through a gate, which will also be an RFID reader, with a camera focused on it as well, the gate will read the tag so the system will know the owner of the bag or the bag itself through the picture taken when he/she checked in and therefore it will match the passenger or bag leaving the airport with the original owner of the bag or the actual bag.

Optionally, if the baggage and passenger don't match an alarm will sound and a manual check will occur.

Although the invention has been described with reference to certain specific embodiments, various modifications thereof will be apparent to those skilled in the art without departing from the spirit and scope of the invention. All such modifications as would be apparent to one skilled in the art are intended to be included within the scope of the following claims.

## Claims

1. A computer implemented method of tagging baggage to a passenger, said method comprising the steps of:
capturing an image of baggage associated with the passenger;
associating the image of baggage with passenger information to create a baggage record; and
storing the baggage record in a database.

2. A digital method of tagging baggage to a passenger, said method comprising the steps of:
capturing an image of a passenger;
capturing an image of baggage associated with the passenger;
associating the image of the passenger, the image of baggage with passenger information to create a baggage record; and
storing the baggage record in a database.

3. A computer implemented method, in particular a computer implemented method according ot claim 1, for identifying the owner of a lost baggage, said method comprising the steps of:
searching a baggage record database; wherein the baggage record database comprises a plurality of baggage records, each record comprising an image of baggage and associated passenger information; and
identifying the owner of a baggage based on the search.

4. The method of any one of claims 1 to 3; wherein the passenger information comprises a digital image of the passenger that is optionally tagged with descriptors of the passenger, wherein the digital image of the passenger is obtained from travel documents, and wherein the digital image of the passenger is captured when the baggage is checked in.

5. A computer implemented method for locating tagless baggage, said method comprising the step of:
searching a tagless baggage database; wherein the tagless baggage database comprises a plurality of tagless baggage records, each record comprising an image of a tagless baggage and current location.

6. The method of any one of claims 1 to 5, wherein
each image in the tagless baggage database is a three-dimensional image, or
wherein the digital image is a three-dimensional image.

7. The method of any one of claims 1 to 6, wherein
each image in the tagless baggage database is tagged, wherein each image in the tagless baggage database is analyzed for prominent colour and the digital image is tagged with identifying colour, or
wherein the digital image of the baggage is automatically tagged wherein the digital image of the baggage is analyzed for prominent colour and the digital image is tagged with identifying colour.

8. The method of any one of claims 3 to 7, wherein
the search of the tagless baggage database comprises searching images in the database with an image of a missing baggage taken at check-in, or
wherein the searching the baggage record database comprises searching the database using an image matching software.

9. The method of claim 8, wherein
image matching includes colour matching, size matching, shape matching, outline matching, relative position of landmarks on the baggage or combination thereof, or
wherein the image matching software utilizes colour matching, size matching, shape matching, outline matching, relative position of landmarks on the baggage or combination thereof.

10. A computer implemented method for locating tagless baggage, said method comprising the steps of:
providing a tagless baggage database; wherein the tagless baggage database comprises a plurality of tagless baggage records, each record comprising an image of a tagless baggage, the weight of the tagless baggage and current location;
searching the tagless baggage by comparing images in the database with an image of a missing baggage taken at check-in, wherein the search is weight restricted based on the weight of the missing baggage at check-in.

11. A computer implemented method of tracking baggage, said method comprising the steps of:
capturing an image of a passenger;
capturing an image of baggage associated with the passenger;
associating the image of the passenger, the image of baggage with passenger information to create a baggage record;
storing the baggage record in a database; and
matching the baggage with its passenger/owner when leaving the airport using digital image recognition.

12. The method of claim 11, wherein the baggage is RFID tagged at check-in.

13. The method of claim 11, comprising the step of sending an alert if the baggage is retrieved by a passenger not associated with the baggage in the baggage record.

14. A computer implemented method of tracking baggage, said method comprising the steps of:
capturing an image of baggage associated with the passenger;
associating the image of baggage with routing information to create a routing plan;
storing the routing plan in a database; and
tracking the baggage during transit using digital image recognition.

15. The method of claim 14, wherein a digital image of the baggage is capture at a plurality of points during routing.
